# FASCICULE DE BREVET EUROPEEN

(11) **EP 2 955 427 B1**
(45) Date de publication et mention de la délivrance du brevet: **09.05.2018**
(21) Numéro de dépôt: 15159230.0
(22) Date de dépôt: 16.03.2015
(51) Int. Cl.: F17C 5/00, F17C 5/06, F17C 13/02

(54) **STATION DE REMPLISSAGE DE RÉSERVOIRS DE GAZ SOUS PRESSION**
FÜLLSTATION VON UNTERDRUCK-GASTANKS
STATION FOR FILLING PRESSURISED GAS TANKS

(30) Priorité: 28.05.2014 FR 1454816
(43) Date de publication de la demande: 16.12.2015
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Allidieres, Laurent, 38410 Saint Martin D'Uriage (FR)
(74) Mandataire: De Cuenca, Emmanuel Jaime

(56) Documents cités:
- EP-A2- 1 593 905
- FR-A1- 2 928 716
- US-A1- 2012 024 892

## Description

La présente invention concerne une station de remplissage de gaz carburant.

L'invention concerne plus particulièrement une station de remplissage de réservoirs avec du gaz carburant sous pression, la station comprenant une borne de distribution de gaz comportant au moins une conduite dont une extrémité est munie d'un raccord destiné à être relié fluidiquement à un réservoir à remplir, la borne de distribution étant reliée fluidiquement à une source de gaz via un circuit de distribution de gaz sous pression, la station comprenant au moins un échangeur de chaleur en échange thermique avec le gaz fourni à la borne de distribution pour refroidir ledit gaz, l'échangeur de chaleur étant situé sur le circuit de distribution.

Le document EP 1593905A décrit une station de remplissage conforme au préambule de la revendication 1.

L'invention concerne notamment les stations de remplissage de réservoirs d'hydrogène sous pression de véhicules à pile à combustible. Ces stations de remplissages sont prévues pour remplir des réservoirs en quelques minutes à une pression élevée, par exemple 700 bar.

Afin de permettre un remplissage rapide, l'hydrogène doit dans certains cas être refroidi avant d'être injecté dans le réservoir du véhicule. En effet, pour permettre le remplissage rapide des réservoirs, l'hydrogène doit par exemple être refroidi à une température pouvant aller jusqu'à -40°C. Pour ce faire, la station de remplissage comprend généralement un échangeur de chaleur prévu pour le refroidissement du gaz qui remplit le véhicule. L'échangeur de chaleur doit être le plus près possible de la borne de distribution d'hydrogène afin de garantir une distribution de gaz froid au plus tôt lors du remplissage (c'est-à-dire pour minimiser le temps de refroidissement de la tuyauterie entre l'échangeur et la borne de distribution)

Les stations de remplissage d'hydrogène gazeux sont de plus en plus souvent intégrées dans des stations de ravitaillement existantes délivrant toutes sortes de carburant (essence notamment).

Les bornes de distribution du carburant sont placées sur des ilots, c'est-à-dire des emplacements de la station ayant une surface au sol déterminée. La largeur de ces ilots est la plupart du temps déterminée par la largeur des bornes de distribution de carburant conventionnels. La longueur de ces ilots varie en fonction de la configuration du site, de l'ordre de 3 à 4 m par borne Les solutions proposées doivent être compactes.

Une première solution connue consiste à disposer un échangeur de chaleur dans la borne de distribution. Cependant, dans ce cas, une intégration dans un ilot « standard » existant de la station est difficile car l'échangeur a un diamètre proche de la largeur de l'ilot et la longueur de l'ilot ne permet pas d'y intégrer une borne de distribution comprenant un échangeur.

Dans une autre solution, l'échangeur de chaleur n'est pas placé dans la borne de distribution mais au plus près de la borne de distribution. Ceci impose de placer l'échangeur de chaleur dans l'ilot, dans un caveau sous-terrain. Cette solution nécessite cependant de prévoir de la place disponible pour l'échangeur dans la station et ne facilite pas sa maintenance et son installation (la borne de distribution de gaz et l'échangeur de refroidissement sont alors deux entités séparées qui doivent être intégrées sur le site). De plus, la tuyauterie entre la borne de distribution et l'échangeur doit être isolée ou refroidie, ce qui complique le montage sur site du système.

Une autre solution consiste à déporter la mise en froid du gaz (l'échangeur de chaleur) par rapport à la borne de remplissage. Dans ce cas les conduites de transfert du gaz refroidi doivent être isolées thermiquement pour maintenir le froid entre l'échangeur déporté et la borne de distribution ou, dans autre une solution connue, les conduites doivent être activement refroidies par le liquide réfrigérant. Ceci augmente la complexité et le coût de la station du fait de la nécessité de prévoir pour le gaz un circuit à haute pression isolé et refroidi.

Un but de la présente invention est de pallier tout ou partie des inconvénients de l'art antérieur relevés ci-dessus.

A cette fin, la station selon l'invention, par ailleurs conforme à la définition générique qu'en donne le préambule ci-dessus, est essentiellement caractérisée en ce que la borne de distribution et l'échangeur de chaleur sont disposés sur un support commun, l'échangeur de chaleur étant disposé en dessous de la borne de distribution, le support étant mobile entre une première position basse dans laquelle la base de la borne repose au niveau du sol tandis que l'échangeur de chaleur est situé dans une cavité en dessous du niveau du sol et une seconde position haute dans laquelle l'échangeur est remonté de la cavité au niveau du sol ou au-dessus du niveau du sol.

Ceci permet d'intégrer un échangeur de chaleur à la borne de distribution tout en possédant une empreinte au sol limitée et une accessibilité optimale.

Par ailleurs, des modes de réalisation de l'invention peuvent comporter l'une ou plusieurs des caractéristiques suivantes :
- le support est relié à un mécanisme élévateur comprenant au moins l'un parmi : une table élévatrice, un ascenseur, un mécanisme à pantographe(s),
- le support est relié à un mécanisme élévateur mécanique et/ou hydraulique et/ou électrique,
- l'échangeur de chaleur est alimenté en frigories à partir d'une source froide de fluide frigorigène via un circuit de fluide frigorigène, le circuit de fluide frigorigène comprenant une zone de connexion/déconnexion rapide avec l'échangeur de chaleur pour permettre la déconnexion/connexion entre le l'échangeur de chaleur et le circuit de fluide frigorigène,
- la station comprend un organe de verrouillage du support en position basse, l'organe de verrouillage étant commutable entre un premier état dans lequel l'organe de verrouillage bloque le support dans sa première position basse, c'est-à-dire empêche son déplacement vers la seconde position haute et un second état dans lequel l'organe de verrouillage autorise le déplacement du support vers la seconde position haute,
- l'organe de verrouillage est relié ou coopère avec la zone de connexion/déconnexion rapide et est conformé pour commuter dans son premier état et bloquer le support dans sa première position basse tant que l'échangeur de chaleur est connecté au circuit de fluide frigorigène,
- le circuit de distribution comprend une zone de connexion/déconnexion rapide avec l'échangeur de chaleur et/ou la borne pour permettre la déconnexion/connexion entre d'une part le circuit de distribution et, d'autre part, l'échangeur de chaleur ou la borne,
- l'organe de verrouillage est relié ou coopère avec la zone de connexion/déconnexion rapide et est conformé pour commuter dans son premier état bloquant le support dans sa première position basse tant que l'échangeur de chaleur ou la borne est connecté au circuit de distribution,
- l'organe de verrouillage comprend un organe mécanique et/ou électrique relié au support mobile et relié physiquement ou électriquement à la zone de connexion rapide,
- le mécanisme élévateur comprend un organe d'actionnement à commande électrique via un logique électronique de traitement de données, la logique électronique intégrant l'organe de verrouillage.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe verticale, schématique et partielle, illustrant un exemple de réalisation d'une station de remplissage selon l'invention dans une première configuration abaissée,
- la figure 2 représente la station de la figure 1 mais dans une seconde configuration relevée,
- la figure 3 représente une vue en perspective et schématique illustrant un exemple de réalisation possible d'un système de support mobile.

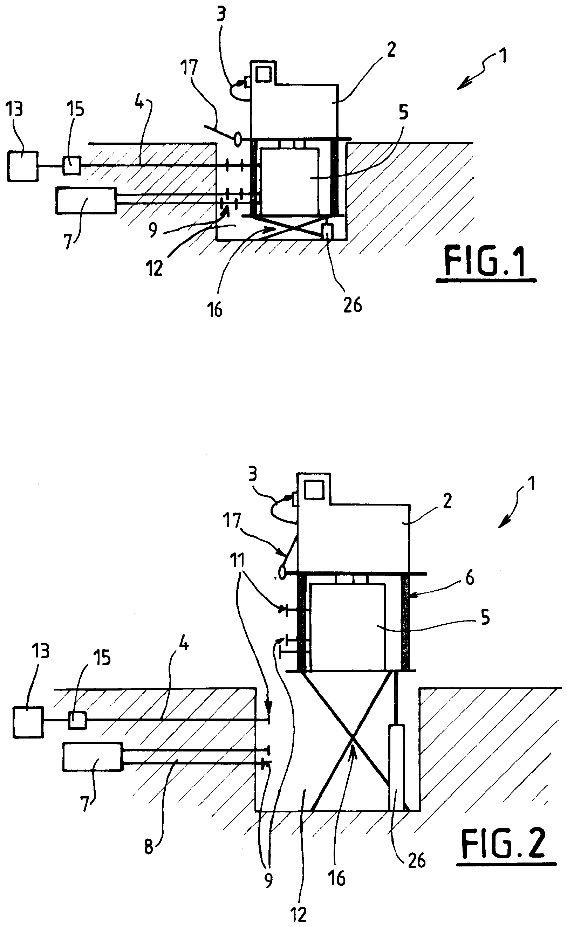

Les figures 1 et 2 représentent un exemple de station de remplissage de réservoirs avec du gaz carburant sous pression (par exemple de l'hydrogène).

La station 1 comprend classiquement une borne 2 de distribution de gaz comportant au moins un flexible 3 dont une extrémité est munie d'un raccord destiné à être relié fluidiquement à un réservoir à remplir (par exemple un réservoir de véhicule automobile).

La borne 2 de distribution est reliée fluidiquement à une source 13 de gaz sous pression via un circuit 4 de distribution de gaz sous pression. Par exemple, au moins une partie du circuit 4 de distribution est souterrain et/ou intégré dans un caniveau.

La station 1 comprend un échangeur 5 de chaleur prévu classiquement pour refroidir le gaz sous pression qui remplit les réservoirs. L'échangeur 5 de chaleur est en échange thermique avec le gaz fourni à la borne 2 de distribution.

Par exemple, la borne 2 est alimentée en gaz sous pression à partir d'un ou plusieurs réservoirs13 et éventuellement d'un compresseur 15. Bien entendu tout autre système de fourniture de gaz sous pression peut être prévu (système de plusieurs réservoirs en parallèle pour assurer un remplissage par équilibrages de pression successifs « en cascade », un système de production de gaz sous pression à partir d'un réservoir de gaz liquéfié et d'un vaporiseur...). La source 13 de gaz alimente la borne 2 de distribution via le circuit 4 de distribution et l'échangeur 5.

L'échangeur 5 de chaleur est situé sur le circuit 4 de distribution par exemple juste en amont de la borne 2 de distribution (selon le sens d'écoulement du gaz).

L'échangeur 5 de chaleur est par exemple un échangeur assurant un échange de chaleur entre le gaz à refroidir et un fluide de refroidissement. A cet effet, l'échangeur 5 de chaleur peut être alimenté en frigories à partir d'une source 7 froide via un circuit 8 de fluide frigorigène. Par exemple, le système de refroidissement et notamment l'échangeur peut comporter tout ou partie des caractéristiques décrites dans le document FR2928716A1. Le fluide de refroidissement peut comprendre un liquide tel que de l'azote, de l'eau glycolée, de l'eau salée ou tout autre fluide approprié. L'échangeur 5 peut comprendre de l'aluminium ou tout autre matériau et peut comporter une masse formant un bloc de matière ayant une inertie thermique importante pour former un accumulateur de frigories.

Selon une particularité avantageuse, la borne 2 de distribution et l'échangeur 5 de chaleur sont disposés sur un support 6 commun, l'échangeur 5 de chaleur étant disposé en dessous de la borne 2 de distribution et le support 6 est mobile entre une première position basse dans laquelle la base de la borne 2 repose au niveau du sol tandis que l'échangeur 5 de chaleur est situé dans une cavité 12 en dessous du niveau du sol et une seconde position haute dans laquelle l'échangeur 5 est remonté de la cavité 12 au niveau du sol ou au-dessus du niveau du sol.

Par exemple, le support 6 peut comporter deux plateaux superposés sur lesquels sont disposés respectivement la borne 2 de remplissage et l'échangeur 5.

Le support 6 est relié à un mécanisme 16, 26 élévateur permettant d'élever l'ensemble et de le redescendre.

Le mécanisme comprend par exemple au moins l'un parmi : une table élévatrice, un ascenseur, un mécanisme à pantographe, un mécanisme à câble(s) et poulie(s).

C'est-à-dire que le support 6 est relié à un mécanisme 16, 26 élévateur (ascenseur) mécanique et/ou hydraulique et/ou électrique.

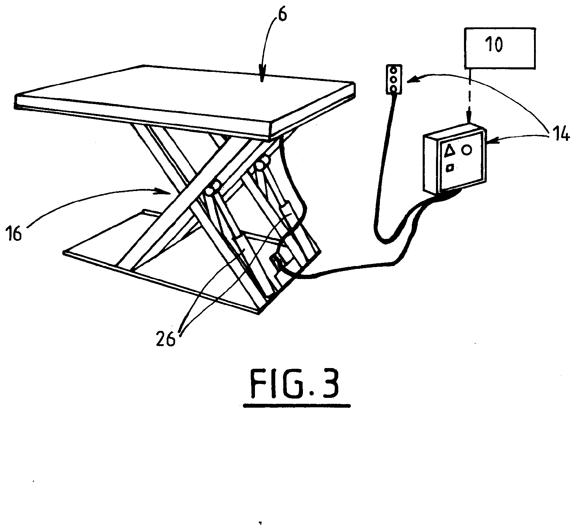

La figure 3 illustre un exemple de plateau élévateur monté sur deux paires de pantographes 16 actionnés par un système des vérins 26 hydrauliques ou pneumatiques commandés par un boîtier 14 électrique de commande. Le plateau élévateur est par exemple disposé/fixé sur le fond de la cavité 12 souterraine.

Bien entendu tout autre système élévateur approprié pourrait être utilisé par exemple un mécanisme à câble(s) et poulie(s).

En mode opérationnel (lorsque la station 1 est en configuration de remplir des réservoirs), le support 6 est en position basse (cf. figure 1). En revanche, afin de faciliter la maintenance, le support 6 peut être relevé (figure 2).

De préférence la station 1 comprend un organe 14 de verrouillage du support 6 en position basse. L'organe 14 de verrouillage est commutable entre un premier état dans lequel l'organe 14 de verrouillage bloque le support 6 dans sa première position basse, c'est-à-dire empêche son déplacement vers la seconde position haute et un second état dans lequel l'organe 14 de verrouillage autorise le déplacement du support 6 vers la seconde position haute.

L'organe 14 de verrouillage peut comporter un loquet (butée) mécanique et/ou un verrou électrique le cas échéant.

De préférence également, le circuit 8 de fluide frigorigène comprend une zone 9 de connexion/déconnexion rapide avec l'échangeur 5 de chaleur pour permettre la déconnexion/connexion entre le l'échangeur 5 de chaleur et le circuit 8 de fluide frigorigène. Cette zone 9 de connexion/déconnexion comprend par exemple un ensemble de raccord(s) rapide(s) pour relier fluidiquement ou non le circuit 8 de fluide frigorigène avec l'échangeur 5 de chaleur.

Les lignes de connexion des circuits 4, 8 peuvent être flexibles ou semi rigides connectées à des raccords démontables afin de compenser les écarts d'alignement des tuyauteries.

De même, selon le même principe que ci-dessus, le circuit 4 de distribution peut également comprendre une zone 11 de connexion/déconnexion rapide avec l'échangeur 5 de chaleur (et/ou la borne 2) pour permettre la déconnexion/connexion entre le l'échangeur 5 de chaleur (ou la borne 2) et le circuit 8 de distribution de gaz sous pression.

De préférence, l'organe 14 de verrouillage est relié ou coopère avec la zone 9 de connexion/déconnexion rapide et est conformé pour commuter dans son premier état et bloquer le support 6 dans sa première position basse tant que l'échangeur 5 et/ou a borne 2 de distribution est connecté au circuit 8 de fluide frigorigène ou au circuit 4 de distribution.

C'est-à-dire que le système de verrouillage du mécanisme empêche tout mouvement du support 6 si une des tuyauteries n'est pas débranchée. Ce système mécanique peut être un obturateur physique rotatif couplé mécaniquement ou électriquement au système d'élévation qui n'autorise la montée du support 6 que lorsque tous les raccords 9, 11 sont démontés.

Dans l'exemple de la figure 3 la position verticale du support 6 est déterminée par un système de vérins 26 commandé électriquement via un système 14 comprenant par exemple une armoire électrique et une borne de manuelle à boutons poussoirs. Par exemple, la commande du levage du support 6 est inactivée par sa logique électronique de commande par exemple tant qu'un capteur 10 indique que les connexions fluidiques 9, 11 n'ont pas été débranchées. Le capteur 10 peut comprendre au moins un parmi : un capteur électrique, un capteur de pression, un interrupteur, un capteur optique...

De cette façon, l'échangeur 5 de chaleur (et la borne 2) doivent être détachés des circuits fluidiques les alimentant avant de surélever le support 6. Ceci permet d'éviter des accidents et ruptures de câbles par exemple.

La station 1 peut comporter un capot ou volet 17 mobile permettant d'accéder aux zones 9, 11 de connexion/déconnexion dans la cavité 12 lorsque le support 6 est en position basse. Le volet 17 est par exemple monté mobile (articulé) sur le support 6.

Par exemple, l'organe 14 de verrouillage et/ou le système de levage du support 6 est inaccessible ou désactivé tant que les circuits 4, 8 restent connectés fluidiquement à la borne 2 et/ou à l'échangeur 5.

La station 1 présente de nombreux avantage et notamment :
- une grande compacité,
- un coût d'installation réduit (l'échangeur 5 de chaleur pouvant être assemblé à l'avance en usine avec la borne 2 de distribution),
- une disposition de l'échangeur 5 de chaleur au plus près de la borne 2 de remplissage ce qui permet de refroidir efficacement le gaz,
- un accès aisé à l'échangeur 5 de chaleur pour sa maintenance (par rapport notamment à une solution enterrée fixe).

## Revendications

1. Station de remplissage de réservoirs avec du gaz carburant sous pression, la station (1) comprenant une borne (2) de distribution de gaz comportant au moins une conduite (3) dont une extrémité est munie d'un raccord destiné à être relié fluidiquement à un réservoir à remplir, la borne (2) de distribution étant reliée fluidiquement à une source (13) de gaz via un circuit (4) de distribution de gaz sous pression, la station (1) comprenant au moins un échangeur (5) de chaleur en échange thermique avec le gaz fourni à la borne (2) de distribution pour refroidir ledit gaz, l'échangeur (5) de chaleur étant situé sur le circuit (4) de distribution, la borne (2) de distribution et l'échangeur (5) de chaleur étant disposés sur un support (6) commun, **caractérisé en ce que** l'échangeur (5) de chaleur est disposé en dessous de la borne (2) de distribution et **en ce que** le support (6) est mobile entre une première position basse dans laquelle la base de la borne (2) repose au niveau du sol tandis que l'échangeur (5) de chaleur est situé dans une cavité (12) en dessous du niveau du sol et une seconde position haute dans laquelle l'échangeur (5) est remonté de la cavité (12) au niveau du sol ou au-dessus du niveau du sol.

2. Station selon la revendication 1, **caractérisée en ce que** le support (6) est relié à un mécanisme (16, 26) élévateur comprenant au moins l'un parmi : une table élévatrice, un ascenseur, un mécanisme à pantographe(s).

3. Station selon la revendication 1 ou 2, **caractérisée en ce que** le support (6) est relié à un mécanisme (16, 26) élévateur mécanique et/ou hydraulique et/ou électrique.

4. Station selon l'une quelconque des revendications 1 à 3, **caractérisée en ce que** l'échangeur (5) de chaleur est alimenté en frigories à partir d'une source (7) froide de fluide frigorigène via un circuit (8) de fluide frigorigène et **en ce que** le circuit (8) de fluide frigorigène comprend une zone (9) de connexion/déconnexion rapide avec l'échangeur (5) de chaleur pour permettre la déconnexion/connexion entre le l'échangeur (5) de chaleur et le circuit (8) de fluide frigorigène.

5. Station selon l'une quelconque des revendications 1 à 4, **caractérisée en ce que** la station (1) comprend un organe (14) de verrouillage du support (6) en position basse, l'organe (14) de verrouillage étant commutable entre un premier état dans lequel l'organe (14) de verrouillage bloque le support (6) dans sa première position basse, c'est-à-dire empêche son déplacement vers la seconde position haute et un second état dans lequel l'organe (14) de verrouillage autorise le déplacement du support (6) vers la seconde position haute.

6. Station selon les revendications 4 et 5, **caractérisée en ce que** l'organe (14) de verrouillage est relié ou coopère avec la zone (9) de connexion/déconnexion rapide et est conformé pour commuter dans son premier état et bloquer le support (6) dans sa première position basse tant que l'échangeur (5) de chaleur est connecté au circuit (8) de fluide frigorigène.

7. Station selon l'une quelconque des revendications 1 à 6, **caractérisée en ce que** le circuit (4) de distribution comprend une zone (11) de connexion/déconnexion rapide avec l'échangeur (5) de chaleur et/ou la borne (2) pour permettre la déconnexion/connexion entre d'une part le circuit (8) de distribution et, d'autre part, l'échangeur (5) de chaleur ou la borne (2).

8. Station selon les revendications 5 et 7, **caractérisée en ce que** l'organe (14) de verrouillage est relié ou coopère avec la zone (11) de connexion/déconnexion rapide et est conformé pour commuter dans son premier état bloquant le support (6) dans sa première position basse tant que l'échangeur (5) de chaleur ou la borne (2) est connecté au circuit (4) de distribution.

9. Station selon l'une quelconque des revendications 5, 6 ou 8, **caractérisée en ce que** l'organe (14) de verrouillage comprend un organe mécanique et/ou électrique relié au support (6) mobile et relié physiquement ou électriquement à la zone de connexion rapide (9, 11).

10. Station selon la revendication 9, **caractérisé en ce que** le mécanisme (16, 26) élévateur comprend un organe (26) d'actionnement à commande électrique via un logique (14) électronique de traitement de données et **en ce que** la logique (14) électronique intègre l'organe (14) de verrouillage.

## Patentansprüche

1. Station zum Befüllen von Tanks mit unter Druck stehendem Brenngas, wobei die Station (1) eine Gaszapfsäule (2) umfasst, welche mindestens eine Leitung (3) besitzt, von der ein Ende mit einem Anschluss ausgestattet ist, der dazu vorgesehen ist, fluidisch an einen zu befüllenden Tank angeschlossen zu werden, wobei die Zapfsäule (2) über einen Druckgas-Zapfkreis (4) fluidisch an eine Gasquelle (13) angeschlossen ist, wobei die Station (1) mindestens einen Wärmetauscher (5) umfasst, der mit dem der Zapfsäule (2) zugeführten Gas in Wärmeaustausch steht, um das Gas zu kühlen, wobei der Wärmetauscher (5) im Zapfkreis (4) liegt, wobei die Zapfsäule (2) und der Wärmetauscher (5) auf einem gemeinsamen Träger (6) angeordnet sind, **dadurch gekennzeichnet, dass** der Wärmetauscher (5) unter der Zapfsäule (2) angeordnet ist und dadurch, dass der Träger (6) zwischen einer ersten unteren Stellung, in der die Basis der Säule (2) auf Bodenniveau ruht, während der Wärmetauscher (5) in einem Hohlraum (12) unter dem Bodenniveau liegt, und einer zweiten oberen Stellung beweglich ist, in der der Tauscher (5) aus dem Hohlraum (12) heraus auf Bodenniveau oder über Bodenniveau angehoben ist.

2. Station nach Anspruch 1, **dadurch gekennzeichnet, dass** der Träger (6) an einen Hubmechanismus (16, 26) angeschlossen ist, der mindestens eines umfasst aus: einem Hubtisch, einem Lift, einem Mechanismus mit Stromabnehmer(n).

3. Station nach Anspruch 1 oder 2, **dadurch gekennzeichnet, dass** der Träger (6) an einen mechanischen und/oder hydraulischen und/oder elektrischen Hubmechanismus (16, 26) angeschlossen ist.

4. Station nach einem der Ansprüche 1 bis 3, **dadurch gekennzeichnet, dass** der Wärmetauscher (5) über einen Kältemittelkreis (8) mit Kälte aus einer Kältemittel-Kältequelle (7) gespeist wird und dadurch, dass der Kältemittelkreis (8) einen Bereich (9) zum schnellen Verbinden/Trennen mit dem Wärmetauscher (5) umfasst, um das Trennen/Verbinden zwischen dem Wärmetauscher (5) und dem Kältemittelkreis (8) zu ermöglichen.

5. Station nach einem der Ansprüche 1 bis 4, **dadurch gekennzeichnet, dass** die Station (1) ein Glied (14) zum Verriegeln des Trägers (6) in unterer Stellung umfasst, wobei das Verriegelungsglied (14) zwischen einem ersten Zustand, in dem das Verriegelungsglied (14) den Träger (6) in seiner ersten unteren Stellung sperrt, das heißt seine Bewegung zur zweiten oberen Stellung verhindert, und einem zweiten Zustand schaltbar ist, in dem das Verriegelungsglied (14) die Bewegung des Trägers (6) zur zweiten oberen Stellung erlaubt.

6. Station nach den Ansprüchen 4 und 5, **dadurch gekennzeichnet, dass** das Verriegelungsglied (14) an den Bereich(9) zum schnellen Verbinden/Trennen angeschlossen ist und mit demselben zusammenwirkt und dafür ausgebildet ist, in seinen ersten Zustand zu schalten und den Träger (6) in seiner ersten unteren Stellung zu sperren, solange der Wärmetauscher (5) mit dem Kältemittelkreis (8) verbunden ist.

7. Station nach einem der Ansprüche 1 bis 6, **dadurch gekennzeichnet, dass** der Zapfkreis (4) einen Bereich (11) zum schnellen Verbinden/Trennen mit dem Wärmetauscher (5) und/oder der Säule (2) umfasst, um das Trennen/Verbinden zwischen einerseits dem Zapfkreis (8) und andererseits dem Wärmetauscher (5) oder der Säule (2) zu ermöglichen.

8. Station nach den Ansprüchen 5 und 7, **dadurch gekennzeichnet, dass** das Verriegelungsglied (14) an den Schnellverbindungs/-trennbereich (11) angeschlossen ist oder mit demselben zusammenwirkt und dafür ausgebildet ist, in seinen ersten, den Träger (6) in seiner ersten unteren Stellung sperrenden Zustand zu schalten, solange der Wärmetauscher (5) oder die Säule (2) mit dem Zapfkreis (4) verbunden ist.

9. Station nach einem der Ansprüche 5, 6 oder 8, **dadurch gekennzeichnet, dass** das Verriegelungsglied (14) ein mechanisches und/oder elektrisches Glied umfasst, das an den beweglichen Träger (6) angeschlossen und physisch oder elektrisch an den Schnellverbindungsbereich (9, 11) angeschlossen ist.

10. Station nach Anspruch 9, **dadurch gekennzeichnet, dass** der Hubmechanismus (16, 26) ein Betätigungsglied (26) mit elektrischer Steuerung über eine elektronische Datenverarbeitungslogik (14) umfasst, und dadurch, dass die elektronische Logik (14) das Verriegelungsglied (14) beinhaltet.

## Claims

1. Station for filling tanks with pressurised fuel gas, the station (1) comprising a gas distribution terminal (2) comprising at least one pipe (3) of which one end is provided with a connector intended to be fluidly connected to a tank to be filled, with the distribution terminal (2) being fluidically connected to a source (13) of gas via a circuit (4) of pressurised gas distribution, with the station (1) comprising at least one heat exchanger (5) in heat exchange with the gas provided to the distribution terminal (2) in order to cool said gas, with the heat exchanger (5) being situated on the distribution circuit (4), with the distribution terminal (2) and the heat exchanger (5) being arranged on a common support (6), **characterised in that** the heat exchanger (5) is arranged below the distribution terminal (2) and **in that** the support (6) is mobile between a first bottom position wherein the base of the terminal (2) rests at the ground level while the heat exchanger (5) is located in a cavity (12) below ground level and a second top position wherein the exchanger (5) is raised from the cavity (12) to the ground level or above ground level.

2. Station according to claim 1, **characterised in that** the support (6) is connected to an elevating mechanism (16, 26) comprising at least one among: an elevating table, a list, a mechanism with pantograph(s).

3. Station according to claim 1 or 2, **characterised in that** the support (6) is connected to a mechanical and/or hydraulic and/or electric elevating mechanism (16, 26).

4. Station according to any of claims 1 to 3, **characterised in that** the heat exchanger (5) is supplied with frigories from a cold source (7) of refrigerant fluid via a circuit (8) of refrigerant fluid and **in that** the circuit (8) of refrigerant fluid comprises a quick connection/disconnection zone (9) with the heat exchanger (5) in order to allow for the disconnection/connection between the heat exchanger (5) and the circuit (8) of refrigerant fluid.

5. Station according to any of claims 1 to 4, **characterised in that** the station (1) comprises a locking member (14) of the support (6) in bottom position, the locking member (14) being switchable between a first state wherein the locking member (14) blocks the support (6) in its first bottom position, i.e. prevents its displacement to the second top position and a second state wherein the locking member (14) authorises the displacement of the support (6) to the second top position.

6. Station according to claims 4 and 5, **characterised in that** the locking member (14) is connected or cooperates with the quick connection/disconnection zone (9) and is shaped to switch in its first state and block the support (6) in its first bottom position as long as the heat exchanger (5) is connected to the circuit (8) of refrigerant fluid.

7. Station according to any of claims 1 to 6, **characterised in that** the distribution circuit (4) comprises a quick connection/disconnection zone (11) with the heat exchanger (5) and/or the terminal (2) in order to allow for the disconnection/connection between on the one hand the circuit (8) of distribution and, on the other hand, the heat exchanger (5) or the terminal (2).

8. Station according to claims 5 and 7, **characterised in that** the locking member (14) is connected or cooperates with the quick connection/disconnection zone (11) and is shaped to switch in its first state blocking the support (6) in its first bottom position as long as the heat exchanger (5) or the terminal (2) is connected to the distribution circuit (4).

9. Station according to any of claims 5, 6 or 8, **characterised in that** the locking member (14) comprises a mechanical and/or electric member connected to the mobile support (6) and physically or electrically connected to the quick connection zone (9, 11).

10. Station according to claim 9, **characterised in that** the elevating mechanism (16, 26) comprises an actuating member (26) with electric control via an electronic logic (14) for data processing and **in that** the electronic logic (14) integrates the locking member (14).
